# EUROPÄISCHE PATENTSCHRIFT

(11) **EP 1 495 317 B1**
(45) Veröffentlichungstag und Bekanntmachung des Hinweises auf die Patenterteilung: **18.11.2015**
(21) Anmeldenummer: 03711993.0
(22) Anmeldetag: 13.03.2003
(51) Int. Cl.: G01N 21/552, G01N 21/85, G01J 3/36

(54) **SYSTEM ZUR SPEKTROMETRISCHEN BESTIMMUNG EINER CHEMISCHEN UND/ODER PHYSIKALISCHEN PROZESSGRÖSSE**
SYSTEM FOR THE SPECTROMETRIC DETERMINATION OF A CHEMICAL AND/OR PHYSICAL PROCESS VARIABLE
SYSTEME DE DETERMINATION SPECTROMETRIQUE D'UNE GRANDEUR DE PROCESSUS PHYSIQUE ET/OU CHIMIQUE

(30) Priorität: 13.04.2002 DE 10216494
(43) Veröffentlichungstag der Anmeldung: 12.01.2005
(73) Patentinhaber: Endress + Hauser Conducta GmbH + Co. KG, 70839 Gerlingen (DE)
(72) Erfinder: BABEL, Wolfgang, 71263 Weil der Stadt (DE); STEINMÜLLER, Dirk, 76139 Karlsruhe (DE)
(74) Vertreter: Andres, Angelika Maria
(86) Internationale Anmeldenummer: PCT/EP2003/002581
(87) Internationale Veröffentlichungsnummer: WO 2003/087810

(56) Entgegenhaltungen:
- WO-A-98/02734
- DE-A- 3 615 876
- DE-A- 4 200 452
- DE-A- 10 005 130
- DE-A- 10 019 574
- DE-A- 19 952 652

## Beschreibung

Die Erfindung bezieht sich auf ein System zur spektrometrischen Bestimmung einer chemischen und/oder physikalischen Prozeßgröße eines Meßmediums mit einer Prozeßsonde, einem Spektrometermodul und einem Auswertemodul.

Aus der DE 100 19 574 A1 ist ein modular aufgebautes Handmeßgerät zur Qualitätsprüfung von Druckerzeugnissen und deren Vor- und Zwischenprodukten bekannt geworden. Das Handmeßgerät umfasst ein Gehäuse, in dem zumindest eine optoelektronische Sensorik zur wahlweisen Bestimmung von optischen Dichtewerten, spektralen oder farbmetrischen Kennwerten oder von Bilddaten und eine mit der Sensorik verbundene, mit Ein- und Ausgabemitteln versehene Auswerteelektronik angeordnet sind. Das Gehäuse besteht aus zwei lösbar miteinander verbundenen Gehäuseteilen, wobei in einem Gehäuseteil die optoelektronische Sensorik und im anderen Gehäuseteil die Auswerteelektronik angeordnet ist. Zwischen beiden Gehäuseteilen ist eine elektronische und mechanische Schnittstelle vorhanden.

In der DE 199 52 652A1 ist eine Vorrichtung zur multi-parallelen Detektion von flüssigen, in mehreren Meßküvetten befindlichen Proben durch Lichtabsorption beschrieben. Die Vorrichtung besteht aus einer Lichtquelle, einem Probendurchstrahlungsbereich und einer Lichtmeß- und Auswerteeinrichtung, die mit Lichtleiterbündeln lichtleitend verbunden sind. Insbesondere wird ein Detektor mit einstellbarer Wellenlänge offenbart, der die probenspezifischen Signale, die von mehreren aufgetrennten Proben geliefert werden, unter geringen Lichtverlusten und bei hohem Signal-zu-Rausch-Verhältnis parallel registriert und verarbeitet.

Aus WO 98/02734A1 ist ein System zur Echtzeit-Überwachung eines Prozesses mittels Raman-Spektroskopie bekannt, welches mehrere identisch ausgestaltete Beleuchtungs-/Kollektor-Module umfasst, welche an unterschiedlichen Positionen im Prozess angeordnet sind. Das von jedem Kollektor der einzelnen Module gesammelte Licht wird über Lichtleitfasern einem Raman-Spektrometer zugeführt. In einer Ausgestaltung werden mehrere Spektrometersysteme mit jeweils einem ein Raman-Spektrometer umfassenden Spektrometermodul und zugehörigen Beleuchtungs-/Kollektoren-Modulen verwendet. Die Messdaten des oder der Spektrometermodule werden an einen Computer zur Auswertung weitergeleitet.

Die bislang bekannt gewordenen Spektrometersysteme kennen keine Modularität im Aufbau. Vielmehr sind sie ganz individuell auf ein vorgegebenes physikalisches Meßprinzip abgestimmt, mit dem eine gewünschte physikalische oder chemische Prozeßgröße detektiert und/oder überwacht werden kann. Weder das Gehäuse, noch die Anzeigeeinheit, noch die Spektrometerelektronik, noch die Prozeßsonden sind untereinander austauschbar bzw. modular kombinierbar. Die Flexibilität der Systeme ist daher sehr gering und die Anpassung an ein anderes Meßsystem erfordert üblicherweise den kompletten Austausch des Meßsystems. Soll nur die Prozeßsonde ausgetauscht werden, ist bei den bekannt gewordenen Lösungen zumindest eine aufwendige Anpassung des Prozeßanschlusses erforderlich.

Der Erfindung liegt die Aufgabe zugrunde, ein spektrometrisches System vorzuschlagen, das schnell und flexibel an unterschiedliche spektrometrische Messungen adaptierbar ist.

Die Aufgabe wird durch das modular aufgebaute System gemäß Anspruch 1 gelöst.

Durch einen Austausch des Spektrometermoduls läßt sich das System schnell und in einfacher Weise an eine neue Meßaufgabe anpassen. Beispielsweise wird durch den Austausch des Spektrometermoduls ein anderer Wellenlängenbereich (MIR, NIR, UV) nutzbar. Es ist jedoch auch möglich, daß durch den Austausch des Spektrometermoduls auf ein völlig verschiedenartiges physikalisches Meßprinzip umgeschaltet wird. Hierzu ist insbesondere die Spektrometrie-Elektronik, bestehend aus zumindest einer Strahlungsquelle, einer Detektoreinheit, einer elektronischen Signalaufbereitung, also einer Regel-/Auswerteeinheit, und ggf. noch eine Choppereinheit, modular aufgebaut. Die Strahlungsquelle ist auf den jeweils benötigtem spektralen Bereich abgestimmt. So kann es sich bei der Strahlungsquelle beispielsweise um eine Xenonlampe, eine Deuteriumlampe oder eine Halogenlampe handeln. Bevorzugt handelt es sich bei der Detektoreinheit um einen Halbleiter-Detektor auf Silizium-Basis. Jedoch kann es sich auch um einen InGaAs- oder einen PbS2-Detekor oder um einen pyroelektrischen Detektor handeln.

Bevorzugt sind alle möglichen Kombinationen von Spektrometermodulen in einem einheitlichen Gehäuse untergebracht. Daher ist sichergestellt, daß ein beliebiges Spektrometermodul durch ein beliebiges anderes Spektrometermodul ersetzt werden kann, ohne daß konstruktive Umbaumaßnahmen erforderlich sind. Durch den modularen Aufbau des erfindungsgemäßen Systems läßt sich schnell und einfach jede gewünschte Kundenapplikation realisieren, ohne daß die Meßstelle als solche in ihren Grundstrukturen verändert werden muß.

Auch das Gehäuse selbst ist modular aufgebaut: Das Gehäuse dient zur Aufnahme von unterschiedlichen Spektrometrie-Elektronikmodulen, die auf den jeweiligen Anwendungsfall abgestimmt sind, sowie ggf. zur Aufnahme einer ebenfalls modular zu nutzenden Auswerte-/Anzeige- und/oder Bedieneinheit.

Erfindungswesentlich sind hiet bei die folgenden Merkmale:
In Verbindung mit den verschiedenen Prozeßsonden sind verschiedene Befestigungsmodule oder verschiedene Wechselarmaturmodule vorgesehen; die Prozeßsonden und/oder die Befestigungsmodule bzw. die Wechselarmaturmodule sind derart dimensioniert und ausgestaltet, daß sie zur Befestigung der unterschiedlichen Prozeßsonden im Prozeß bzw. zur Einbringung der unterschiedlichen Prozeßsonden in das Meßmedium geeignet sind. Werden Wechselarmaturen für optische Prozeßsonden verwendet, so ist es möglich die installierten Prozeßsonden automatisch zu reinigen und zu kalibrieren. Entsprechende Armaturen werden von der Anmelderin in unterschiedlichen Ausgestaltungen angeboten und vertrieben.

Gemäß einer günstigen Ausführungsform des erfindungsgemäßen Systems ist ein Anzeigemodul vorgesehen, auf dem die spektrometrisch bestimmte Prozeßgröße und/oder weitere prozeßrelevante und-/oder gerätespezifische Daten darstellbar ist/sind.

Als besonders vorteilhaft ist die Ausgestaltung des erfindungsgemäßen Systems zu werten, daß das Auswertemodul und das Anzeige-/Bedienmodul in einem Gehäuse angeordnet sind und somit ein Auswerte-/Anzeigemodul bilden.

Gemäß des erfindungsgemäßen Systems sind das Spektrometermodul und die Prozeßsonde voneinander entfernt angeordnet und über eine Faseroptik miteinander verbunden. Hierdurch lassen sich Naßteil und Elektronikteil vollständig voneinander entkoppeln. Folglich sind die Komponenten, die in unmittelbaren Kontakt mit dem Meßmedium kommen, von den opto-elektronischen und elektrischen Komponenten räumlich abgesetzt.

Als Prozeßsonde kommt z.B. eine Eintauchsonde, vorzugsweise eine ATR-Sonde zu Einsatz. In der ATR (Attenuated Total Reflectance)-Spektroskopie wird der Effekt ausgenutzt, daß ein Lichtstrahl an der Grenzfläche zwischen einem optisch dichteren Medium mit dem Brechungsindex *n*₁ und einem optisch dünneren Medium mit dem Brechungsindex *n*₂ - also wenn gilt: *n*₁ > *n*₂ - total reflektiert wird, wenn der Einfallswinkel des Lichtstrahls den Grenzwinkel für die Totalreflexion überschreitet. Der Sinus dieses Grenzwinkels entspricht dem Quotienten *n*₂/*n*₁. Bei der Totalreflexion tritt das Phänomen auf, daß der Lichtstrahl an der Auftreffstelle A in das dünnere Medium austritt, dann bis zu einer Stelle B als Oberflächenwelle an dem dichteren Medium vorbeiläuft und anschließend wieder in das optisch dichtere Medium zurückkehrt. Erfolgt keine Absorption in dem optisch dünneren Medium, so wird der Lichtstrahl ungeschwächt total reflektiert. Absorbiert das optisch dünnere Medium jedoch die eindringende Strahlung, so tritt eine Schwächung des total-reflektierten Lichtstrahls auf. Diese Schwächung ist abhängig von der Wellenlänge und kann zur sog. Inneren Reflexionsspektroskopie herangezogen werden: Bestimmt man das Transmissions- oder Extinktionsspektrum der total-reflektierten Strahlung, so erhält man Aufschluß über die Zusammensetzung des optisch dünneren Mediums. Bei dem optisch dünneren Medium kann es sich beispielsweise um eine IR-absorbierende, pulverförmige Substanz oder um ein flüssiges Medium handeln, mit dem die ATR-Sonde in direktem Kontakt steht. ATR-Sonden werden heute bevorzugt in der IR-Spektroskopie oder im UV-VIS-Bereich eingesetzt. Es versteht sich, daß in Verbindung mit dem erfindungsgemäßen System anstelle der ATR-Sonde auch eine Transmissionssonde, eine Transflexionssonde, oder eine Durchflusssonde verwendet werden kann.

Erfindungsgemäß sind die Prozeßsonde, das Spektrometermodul und die Faseroptik derart ausgestaltet, daß sie die Bestimmung der chemischen und/oder physikalischen Prozeßgröße in einem geeigneten Wellenlängenbereich durchführen können. Darüber hinaus umfaßt das Spektrometermodul eine Strahlungsquelle, ein dispersives Modul, eine Detektormodul und ein Elektronikmodul zur Aufbereitung der Meßsignale und ist in einem Gehäuse untergebracht.

Eine vorteilhafte Ausführungsform des erfindungsgemäßen Systems sieht vor, das Auswertemodul und eventuell das Bedienmodul derart auszugestalten, daß es/sie für unterschiedliche Anzeigemodule und/oder Kommunikationsmodule für Bus- und oder Leitsystemanbindung verwendbar ist/sind.

Weiterhin ist vorgesehen, daß zumindest einzelne Module des erfindungsgemäßen Systems derart ausgestaltet sind, daß sie in explosionsgefährdeten Bereichen einsetzbar sind.

Die Erfindung wird anhand der nachfolgenden Zeichnungen näher erläutert. Es zeigt:
Fig. 1: eine schematische Darstellung des erfindungsgemäßen Systems in der Ausgestaltung 'Nicht-Kompakt-Bauweise'
Fig. 2: eine schematische Darstellung eines nichterfindungsgemäßen Systems in der Ausgestaltung 'Kompakt-Bauweise',
Fig. 3: eine schematische Darstellung von unterschiedlichen Prozeßsondenmodulen, die in Verbindung mit dem erfindungsgemäßen System eingesetzt werden,
Fig. 4: eine schematische Darstellung von unterschiedlichen Spektrometermodulen, die in Verbindung mit dem erfindungsgemäßen System eingesetzt werden, und
Fig. 5: eine Darstellung der Strahlengänge in verschiedenen Prozeßsondenmodulen.

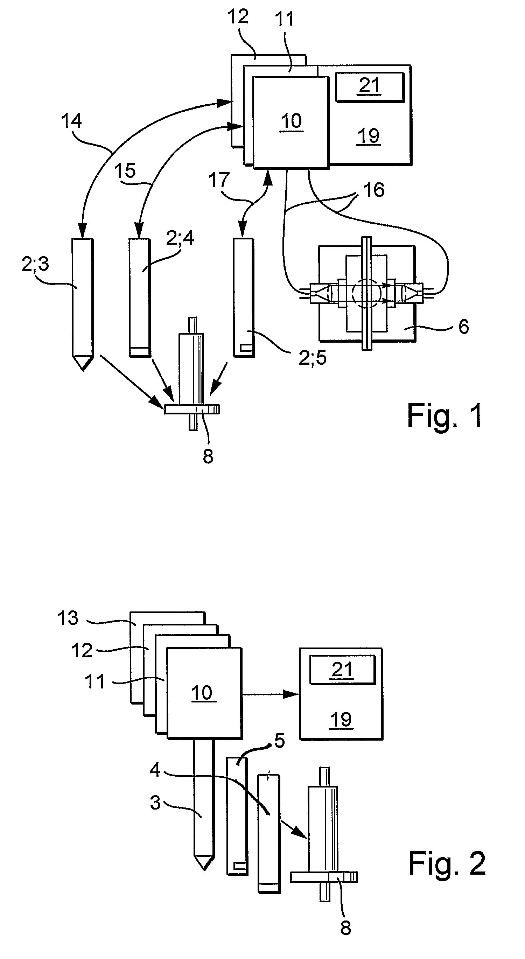

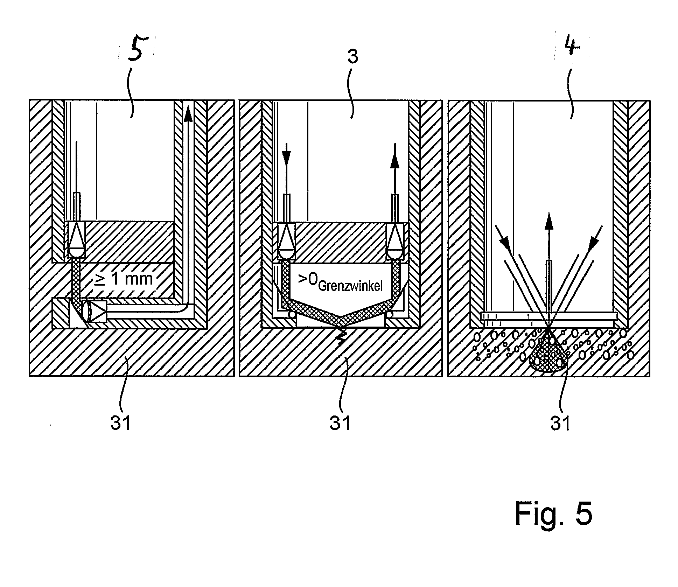

Fig. 1 zeigt eine schematische Darstellung eines bevorzugten Ausführungsbeispiels des erfindungsgemäßen Systems 1 in der Ausgestaltung 'Nicht-Kompakt-Bauweise'. Zur spektrometrischen Bestimmung einer chemischen und/oder physikalischen Prozeßgröße eines Meßmediums werden in Abhängigkeit von dem jeweiligen Anwendungsfall verschiedene Prozeßsonden 2 bereit gestellt. Bei den Prozeßsonden 2 handelt es sich beispielsweise um eine ATR-Sonde 3, eine Transmissionssonde 4, eine Transflexionssonde 5 oder eine Durchflußsonde 6. In Fig. 5 sind übrigens gesondert die Strahlengänge in einer ATR-Sonde 3, einer Transmissionssonde 4 und einer Transflexionssonde 5 schematisch dargestellt.

Die Prozeßsonden 2; 3, 4, 5, 6 werden mittels eines Wechselarmaturmoduls 8 bzw. eines Befestigungsmoduls 7 an ihrem Meßplatz positioniert. Wechselarmaturen 8, die in Verbindung mit dem erfindungsgemäßen System 1 zum Einsatz kommen, werden von der Anmelderin angeboten und vertrieben.

Der jeweils verwendeten Prozeßsonde 2; 3, 4, 5, 6 ist ein auf die Prozeßsonde 2; 3, 4, 5, 6 abgestimmtes sondenspezifisches Spektrometermodul 9; 10, 11, 12, 13 zugeordnet. Je nach Anwendungsfall handelt es sich bei dem Spektrometermodul 9 um ein VIS-Spektrometermodul 10, ein NIR-Spektrometermodul 11, ein UV-Spektrometermodul 12 oder ein MIR-Spektrometermodul 13. Das sondenspezifische Spektrometermodul 9; 10, 11, 12, 13 ist derart ausgestaltet, daß es spektrale Meßsignale zur Verfügung stellt, aus denen das Auswertemodul 19 über einen im wesentlichen einheitlichen Auswertealgorithmus die Prozeßgröße bestimmt.

Bevorzugt sind alle möglichen Kombinationen von Spektrometermodulen 10, 11, 12, 13 in einem einheitlichen Gehäuse 22 untergebracht. Daher ist sichergestellt, daß ein beliebiges Spektrometermodul 10, 11, 12, 13 durch ein beliebiges anderes Spektrometermodul 10, 11, 12, 13 ersetzt werden kann. Durch den modularen Aufbau des erfindungsgemäßen Systems 1 läßt sich schnell und einfach jede gewünschte Kundenapplikation realisieren, ohne daß die Meßstelle als solche in ihren Grundstrukturen verändert werden muß.

Auch das Gehäuse 22 für die Spektrometermodule und/oder für die Auswerteeinheit ist modular aufgebaut. Im gezeigten Fall ist es mit der Anzeige- und/oder Bedieneinheit 20 verbunden bzw. beide bilden eine integrale Einheit. Das Gehäuse 22 dient hier zur Aufnahme der unterschiedlichen Spektrometrie-Elektronikmodule sowie zur Aufnahme einer ebenfalls modular ausgestalteten Anzeige-/Auswerte-/Bedieneinheit 19, 20.

Wie bereits gesagt, bezieht sich Fig. 1 auf ein System 1, bei dem die Prozeßsonden 2; 3, 4, 5, 6 von den empfindlichen Transmittermodulen 9; 10, 11, 12, 13 und den empfindlichen Elektronikteilen der Auswerteeinheit 19 räumlich abgesetzt sind. Im gezeigten Fall wird die Verbindung zwischen den Prozeßsonden 2; 3, 4, 5, 6 und den Transmitter- bzw. Spektrometermodulen 9; 10, 11, 12, 13 über die Faseroptiken 14, 17, 16, 17 realisiert.

Fig. 2 zeigt ein Ausführungsbeispiel eines nicht-erfindungsgemäßen Systems 1 in der Ausgestaltung 'Kompakt-Bauweise'. Hier bilden die Prozeßsonden 2; 3, 4, 5 und die Transmittermodule 9; 10, 11, 12, 13 eine Einheit bzw. einen sog. Kompaktsensor 18. Ein weiterer Unterschied besteht darin, daß das Auswertemodul 19 räumlich von dem zugehörigen Transmittermodul 9; 10, 11, 12, 13 abgesetzt ist. Bevorzugt ist das Auswertemodul 19 (ev. mit integriertem Vorort-BedienModul) derart ausgestaltet, daß es für unterschiedliche Anzeigemodule 20 und/oder für unterschiedliche Kommunikationsmodule für Bus- und oder Leitsystemanbindung verwendbar ist.

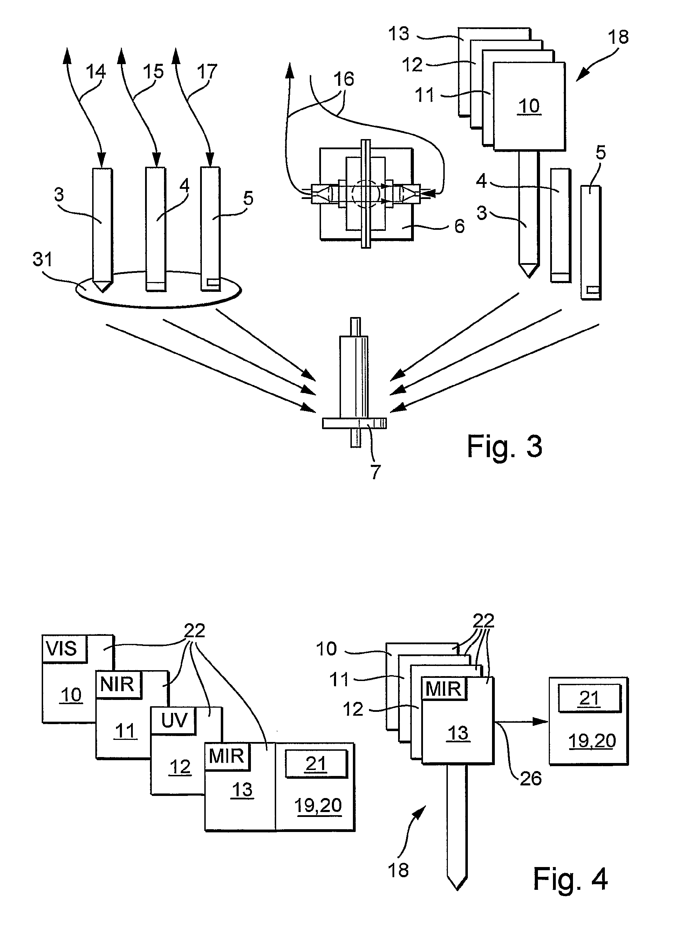

Fig. 3 zeigt einen Ausschnitte der Figuren Fig. 1 und Fig. 2. Insbesondere sind in schematischer Darstellung unterschiedliche Prozeßsondenmodule 2; 3, 4, 5, 6 zu sehen, die in Verbindung mit dem erfindungsgemäßen System 1 eingesetzt werden. Fig. 4 zeigt die entsprechenden Spektrometermodule 9; 10, 11, 12, 13 aus den Figuren Fig. 1 und Fig. 2.

### Bezugszeichenliste

- 1: erfindungsgemäßes System
- 2: Prozeßsonde
- 3: ATR-Sonde
- 4: Transflexionssonde
- 5: Transmissionssonde
- 6: Durchflußsonde
- 7: Befestigungsmodul
- 8: Wechselarmaturmodul
- 9: Spektrometermodul
- 10: VIS-Spektrometermodul
- 11: NIR-Spektrometermodul
- 12: UV-Spektrometermodul
- 13: MIR-Spektrometermodul
- 14: Faseroptik
- 15: Faseroptik
- 16: Faseroptik
- 17: Faseroptik
- 18: Kompaktsensor
- 19: Auswertemodul
- 20: Anzeigemodul
- 21: Display
- 22: Gehäuse
- 23: Lichtquelle
- 24: Dispersives Element
- 25: Elektronikteil
- 26: Schnittstelle

## Patentansprüche

1. Modular aufgebautes System zur spektrometrischen Bestimmung einer chemischen und/oder physikalischen Prozeßgröße eines Meßmediums (29) mit einer Prozeßsonde (2; 3, 4, 5, 6), einem sondenspezifischen Spektrometermodul (9; 10, 11, 12, 13) und einem Auswertemodul (19),
wobei in Verbindung mit dem System, als Prozeßsonde, eine ATR-Sonde (3), eine Transmissionssonde (4), eine Transflexionssonde (5) oder eine Durchflusssonde (6) verwendbar ist,
wobei der jeweils verwendeten Prozeßsonde (2; 3, 4, 5, 6) ein auf die Prozeßsonde (2; 3, 4, 5, 6) abgestimmtes sondenspezifisches Spektrometermodul (9; 10, 11, 12, 13) zugeordnet ist, welches ein VIS-Spektrometermodul (10), ein NIR-Spektrometermodul (11), ein UV-Spektrometermodul (12) oder ein MIR-Spektrometeromodul (13) ist, und
wobei das sondenspezifische Spektrometermodul (9; 10, 11, 12, 13) derart ausgestaltet ist, daß es spektrale Meßsignale zur Verfügung stellt, aus denen das Auswertemodul (19) über einen im wesentlichen einheitlichen Auswertealgorithmus die Prozeßgröße bestimmen kann,
wobei in Verbindung mit den verschiedenen Prozeßsonden (2; 3, 4, 5, 6) verschiedene Befestigungsmodule oder verschiedene Wechselarmaturmodule vorgesehen sind,
wobei die Befestigungsmodule (7) bzw. die Wechselarmaturmodule (8) derart dimensioniert und ausgestaltet sind, daß sie zur Befestigung der unterschiedlichen Prozeßsonden (2; 3, 4, 5, 6) im Prozeß bzw. zur Einbringung der unterschiedlichen Prozeßsonden (2; 3, 4, 5, 6) in das Meßmedium (29) geeignet sind,
wobei das modular aufgebaute System ein Gehäuse für das sondenspezifische Spektrometermodul (9; 10, 11, 12, 13) aufweist, und
wobei das sondenspezifische Spektrometermodul (9; 10, 11, 12, 13) eine Strahlungsquelle (23), ein dispersives Modul (24), ein Detektormodul und ein Elektronikmodul zur Aufbereitung der Messsignale umfasst und in dem Gehäuse (22) untergebracht ist,
und wobei das sondenspezifische Spektrometermodul (9; 10, 11, 12, 13) und die Prozesssonde (2; 3, 4, 5, 6) voneinander entfernt angeordnet und durch eine Faseroptik (14, 15, 16, 17) miteinander verbunden sind.

2. System nach Anspruch 1,
wobei ein Anzeigemodul (20) vorgesehen ist, auf dem die spektrometrisch bestimmte Prozeßgröße und/oder weitere prozeßrelevante und-/oder gerätespezifische Daten darstellbar sind.

3. System nach Anspruch 2,
wobei das Auswertemodul (19) und das Anzeigemodul (20) in einem Gehäuse (22) angeordnet sind und ein Auswerte-/Anzeigemodul (19, 20) bilden.

4. System nach Anspruch 3,
wobei die Prozeßsonde (2; 3, 4, 5, 6), das Spektrometermodul (9; 10, 11, 12, 13) und die Faseroptik (14, 15, 16, 17) derart ausgestaltet sind, daß sie die Bestimmung der chemischen und/oder physikalischen Prozeßgröße in einem geeigneten Wellenlängenbereich durchführen.

5. System nach Anspruch 1,
wobei das Auswertemodul (19) derart ausgestaltet ist, daß es für unterschiedliche Anzeigemodule (20) und/oder Kommunikationsmodule (31) für Bus- und oder Leitsystemanbindung verwendbar ist.

6. System nach einem oder mehreren der vorhergehenden Ansprüche,
wobei zumindest einzelne Module (2; 3, 4, 5, 6;) derart ausgestaltet sind, daß sie in explosionsgefährdeten Bereichen einsetzbar sind.

## Claims

1. Modular system for the spectrometric determination of a chemical and/or physical process variable of a medium (29) with a process probe (2, 3, 4, 5, 6), a probe-specific spectrometer module (9, 10, 11, 12, 13) and an evaluation module (19), wherein it is possible to use an ATR probe (3), a transmission probe (4), a transflection probe (5) or a flow probe (6) as the process probe in conjunction with the system,
wherein the particular process probe used (2, 3, 4, 5, 6) is assigned a probe-specific spectrometer module (9, 10, 11, 12, 13) which is adapted to the process probe (2, 3, 4, 5, 6), said module being a VIS spectrometer module (10), an NIR spectrometer module (11), a UV spectrometer module (12) or an MIR spectrometer module (13), and
wherein the probe-specific spectrometer module (9, 10, 11, 12, 13) is designed in such a way that it makes spectral measuring signals available from which the evaluation module (19) is capable of determining the process variable via an essentially uniform evaluation algorithm,
wherein provisions are made for various fastening modules or various retractable assembly modules in conjunction with the various process probes (2, 3, 4, 5, 6), wherein the fastening modules (7) or the retractable assembly modules (8) are sized and designed in such a way that they are suitable for securing the various process probes (2, 3, 4, 5, 6) in the process or for introducing the various process probes (2, 3, 4, 5, 6) into the measuring medium (29),
wherein the modular system has a housing for the probe-specific spectrometer module (9, 10, 11, 12, 13), and
wherein the probe-specific spectrometer module (9, 10, 11, 12, 13) comprises a radiation source (23), a dispersive module (24), a detector module and an electronics module to prepare the measuring signals, and is accommodated in the housing (22),
and wherein the probe-specific spectrometer module (9, 10, 11, 12, 13) and the process probe (2, 3, 4, 5, 6) are arranged at a distance from one another and are interconnected by means of fiber optics (14, 15, 16, 17).

2. System as claimed in Claim 1,
wherein a display module (20) is provided on which the process variable, which is determined by spectrometric means, and/or other process-related and/or device-specific data can be displayed.

3. System as claimed in Claim 2,
wherein the evaluation module (19) and the display module (20) are arranged in a housing (22) and form an evaluation/display module (19, 20).

4. System as claimed in Claim 3,
wherein the process probe (2, 3, 4, 5, 6), the spectrometer module (9, 10, 11, 12, 13) and the fiber optics (14, 15, 16, 17) are designed in such a way that they determine the chemical and/or physical process variable in a suitable wavelength range.

5. System as claimed in Claim 1,
wherein the evaluation module (19) is designed in such a way that it can be used for different display modules (20) and/or communication modules (31) for connection to the bus and/or control system.

6. System as claimed in one or more of the previous claims,
wherein at least individual modules (2, 3, 4, 5, 6) are designed in such a way that they can be used in hazardous areas.

## Revendications

1. Système de structure modulaire destiné à la détermination spectrométrique d'une grandeur de process chimique et/ou physique d'un produit mesuré (29) avec une sonde de process (2, 3, 4, 5, 6), un module de spectromètre (9, 10, 11, 12, 13) spécifique à la sonde et un module d'exploitation (19),
pour lequel il est possible d'utiliser en tant que sonde de process, en combinaison avec le système,
une sonde ATR (3), une sonde de transmission (4), une sonde de transflexion (5) ou une sonde de débit (6),
pour lequel est affecté à chaque sonde de process (2, 3, 4, 5, 6) utilisée un module de spectromètre (9, 10, 11, 12, 13) spécifique à la sonde et adapté à la sonde de process (2, 3, 4, 5, 6), lequel module est un module de spectromètre VIS (10), un module de spectromètre NIR (11), un module de spectromètre UV (12) ou un module de spectromètre MIR (13), et
pour lequel le module de spectromètre (9, 10, 11, 12, 13) spécifique à la sonde est conçu de telle sorte à mettre à disposition des signaux de mesure spectraux, à partir desquels le module d'exploitation (19) est capable de déterminer la grandeur de process au moyen d'un algorithme d'exploitation pour l'essentiel uniforme,
pour lequel sont prévus en relation avec les différentes sondes de process (2, 3, 4, 5, 6) différents modules de fixation ou différents modules de sonde rétractable, pour lequel les modules de fixation (7) ou les modules de sonde rétractable (8) sont dimensionnés et conçus afin qu'ils soient appropriés pour la fixation des différentes sondes de process (2, 3, 4, 5, 6) au sein du process, ou pour l'introduction des différentes sondes de process (2, 3, 4, 5, 6) dans le produit mesuré (29),
pour lequel le système de structure modulaire comporte un boîtier pour le module de spectromètre (9, 10, 11, 12, 13) spécifique à la sonde, et
pour lequel le module de spectromètre (9, 10, 11, 12, 13) spécifique à la sonde comprend une source de rayonnement (23), un module dispersif (24), un module détecteur et un module électronique en vue du traitement des signaux de mesure, ceux-ci étant logés dans le boîtier (22),
et pour lequel le module de spectromètre (9, 10, 11, 12, 13) spécifique à la sonde et la sonde de process (2, 3, 4, 5, 6) sont disposés à distance l'un de l'autre et reliés entre eux au moyen d'une fibre optique (14, 15, 16, 17).

2. Système selon la revendication 1,
pour lequel est prévu un module d'affichage (20), sur lequel peuvent être représentées la grandeur de process déterminée de façon spectrométrique et/ou d'autres données importantes pour le process et/ou spécifiques à l'appareil.

3. Système selon la revendication 2,
pour lequel le module d'exploitation (19) et le module d'affichage (20) sont disposés dans un boîtier (22) et forment un module d'exploitation / d'affichage (19, 20).

4. Système selon la revendication 3,
pour lequel la sonde de process (2, 3, 4, 5, 6), le module de spectromètre (9, 10, 11, 12, 13) et la fibre optique (14, 15, 16, 17) sont conçus de telle sorte qu'ils effectuent la détermination de la grandeur de process chimique et/ou physique dans une plage de longueurs d'onde appropriée.

5. Système selon la revendication 1,
pour lequel le module d'exploitation (19) est conçu de telle sorte qu'il soit utilisable pour différents modules d'affichage (20) et/ou modules de communication (31) pour l'intégration au bus et/ou au système numérique de contrôle commande.

6. Système selon une ou plusieurs des revendications précédentes,
pour lequel au moins certains modules (2, 3, 4, 5, 6) sont conçus de telle sorte à pouvoir être mis en oeuvre au sein de zones explosibles.
